(19) Europäisches Patentamt
European Patent Office
Office européen des brevets

(11) EP 2 796 955 B1

(12) FASCICULE DE BREVET EUROPEEN

(45) Date de publication et mention de la délivrance du brevet:
**23.12.2015 Bulletin 2015/52**

(51) Int Cl.:
*G05B 23/02* (2006.01)

(21) Numéro de dépôt: **14165936.7**

(22) Date de dépôt: **25.04.2014**

(54) **Système de détection d'anomalie**

Störungserkennungssystem

System for detecting anomalies

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2013 FR 1353860**

(43) Date de publication de la demande:
**29.10.2014 Bulletin 2014/44**

(73) Titulaires:
• **Institut Polytechnique de Grenoble**
  **38000 Grenoble (FR)**
• **CENTRE NATIONAL DE LA RECHERCHE SCIENTIFIQUE**
  **75794 Paris Cedex 16 (FR)**
• **Institut National Polytechnique de Toulouse**
  **31029 Toulouse Cedex 4 (FR)**

(72) Inventeurs:
• **Martin, Nadine**
  **38360 NOYAREY (FR)**
• **Mailhes, Corinne**
  **31500 TOULOUSE (FR)**
• **Gerber, Timothée**
  **38000 GRENOBLE (FR)**

(74) Mandataire: **Thibon, Laurent**
**Cabinet Beaumont**
**1, rue Champollion**
**38000 Grenoble (FR)**

(56) Documents cités:
• **SOLTANI BOZCHALOOI I ET AL: "Teager energy operator for multi-modulation extraction and its application for gearbox fault detectionUS patent pending (serial number: 12/631,528).;Teager energy operator for multi-modulation extraction and its application for gearbox fault detection", SMART MATERIALS AND STRUCTURES, IOP PUBLISHING LTD., BRISTOL, GB, vol. 19, no. 7, 1 juin 2010 (2010-06-01), page 75008, XP020194605, ISSN: 0964-1726, DOI: 10.1088/0964-1726/19/7/075008**
• **MUCCHI E ET AL: "Acoustical signature analysis of a helicopter cabin in steady-state and run up operational conditions", MEASUREMENT, INSTITUTE OF MEASUREMENT AND CONTROL. LONDON, GB, vol. 43, no. 2, 1 février 2010 (2010-02-01), pages 283-293, XP026801552, ISSN: 0263-2241 [extrait le 2009-10-23]**

**Description**

Domaine de la présente description

La présente description concerne un procédé et un système pour détecter une anomalie dans un système mécanique ou électromécanique, et en particulier un procédé et un système pour identifier des composantes spectrales harmoniques et/ou de modulation dans un signal provenant d'au moins un capteur détectant des vibrations et/ou des fluctuations électriques dans le système.

Arrière-plan

Il est connu d'utiliser une analyse de signal sur un signal provenant d'un capteur de vibrations pour surveiller et diagnostiquer des anomalies dans des machines. Par exemple, un procédé pour la surveillance de l'état d'hélicoptères est décrit dans la publication intitulée "Condition Monitoring Diagnosis Methods of Helicopter Units", L.M. Gelman et al., Mechanical Systems and Signal Processing 14.4 (July 2000). En outre, la surveillance de l'état d'éoliennes est décrite dans la publication intitulée "Condition monitoring of wind turbines : Technique and methods", Pedro Fausto Garcia Marquez et al., Renewable Energy 46 (2012), pages 169-178.

Dans de telles techniques, on utilise un ou plusieurs capteurs pour mesurer des vibrations, et le signal provenant de chaque capteur est converti en un spectre de fréquence afin d'analyser la distribution fréquentielle. En particulier, la présence de fréquences fondamentales et harmoniques, et/ou de bandes latérales de modulation à certaines fréquences, peut indiquer une anomalie dans le système, comme l'usure ou le dysfonctionnement de certaines parties.

Toutefois, l'efficacité des techniques courantes pour réaliser une telle détection d'anomalies est limitée en raison d'un problème technique pour identifier avec précision les fréquences fondamentales, harmoniques et de bande de modulation dans le signal provenant des capteurs. SOLTANI BOZCHALOOI I ET AL: "Teager energy operator for multi-modulation extraction and its application for gearbox fault detection", SMART MATERIALS AND STRUCTURES, IOP PUBLISHING LTD., BRISTOL, GB, vol. 19, no. 7, 1 juin 2010 (2010-06-01), page 75008, décrit un procédé pour détecter une anomalie dans un système.

Résumé

Un objet de modes de réalisation de la présente description est de résoudre au moins partiellement un ou plusieurs problèmes de l'art antérieur.

Selon un aspect, on prévoit un procédé pour détecter une anomalie dans un système mécanique ou électromécanique, comprenant les étapes suivantes : identifier par un dispositif de traitement, à partir d'un ensemble de composantes spectrales généré sur la base d'un signal provenant d'au moins un capteur détectant des vibrations et/ou des fluctuations électriques dans le système, au moins des première et deuxième composantes spectrales, chaque composante représentant un harmonique ou une modulation associé à une composante candidate : en déterminant, sur la base d'une fréquence centrale et d'une marge d'erreur de la composante candidate, des limites de fréquence inférieure et supérieure d'une première fenêtre de recherche pour identifier la première composante ; en identifiant la première composante sur la base de la première fenêtre de recherche ; en modifiant la fréquence centrale et la marge d'erreur de la composante candidate sur la base d'une fréquence centrale et d'une marge d'erreur de la première composante ; et en déterminant, sur la base de la fréquence centrale modifiée et de la marge d'erreur modifiée de la composante candidate, des limites de fréquence inférieure et supérieure d'une deuxième fenêtre de recherche pour identifier la deuxième composante.

Selon un mode de réalisation, le procédé comprend en outre l'identification de la deuxième composante dans la deuxième fenêtre de recherche.

Selon un mode de réalisation, le procédé comprend en outre la définition d'une série de composantes spectrales comprenant au moins la composante candidate et les première et deuxième composantes, et la détection de l'anomalie au moins partiellement sur la base de ladite série.

Selon un mode de réalisation, le procédé comprend en outre la génération d'un signal de sortie pour contrôler une partie du système mécanique ou électromécanique sur la base de l'anomalie détectée.

Selon un mode de réalisation, les première et deuxième composantes sont des harmoniques de la composante candidate, et l'anomalie est détectée sur la base de paramètres d'une ou plusieurs composantes de modulation associées à la composante candidate ou à la première ou la deuxième composante.

Selon un mode de réalisation, chacune des limites inférieure et supérieure des première et deuxième fenêtres de recherche est déterminée sur la base des équations $r_k(V_i-E_i)$ et $r_k(V_i+E_i)$, où $r_k$ est l'ordre harmonique des première et deuxième composantes respectivement, $V_i$ est la fréquence centrale associée à la composante candidate, et $E_i$ est la marge d'erreur associée à la composante candidate.

Selon un mode de réalisation, la première composante est considérée comme tombant dans la première fenêtre de recherche si la condition suivante est vérifiée :

$$[a; b] = \big[V_j - E_j; V_j + E_j\big] \cap \big[r_k(V_i - E_i); r_k(V_i + E_i)\big] \neq 0$$

où $V_j$ est la fréquence centrale de la première composante, $E_j$ est la marge d'erreur de la première composante, $V_i$ est la fréquence centrale de la composante candidate, $E_i$ est la marge d'erreur de la composante candidate et $r_k$ est l'ordre de l'harmonique.

Selon un mode de réalisation, à la suite de l'identification de la première composante, la fréquence centrale $V_i$ et la marge d'erreur $E_i$ sont mises à jour de la façon suivante :

$$V_i = \frac{(a + b)}{2 \times r} \; ; \; E_i = \frac{(b - a)}{2 \times r}$$

Selon un mode de réalisation, le procédé comprend en outre la détermination d'au moins un élément parmi une valeur de densité $D_i$ de la série, une valeur de richesse $R_i$ de la série et un taux de distorsion $THD_i$ de la série sur la base des équations suivantes :

$$D_i = \frac{card(H_i)}{r_i^{max}}$$

$$R_i = \frac{r_i^{max}}{N_i^{max}} \;\; avec \;\; N_i^{max} = \left\lfloor \frac{V^{max}}{V_i} \right\rfloor$$

$$THD_i = \frac{\sqrt{\tilde{A}_1^2 + \tilde{A}_2^2 + \ldots + \tilde{A}_{N_{i-1}}^2}}{\tilde{A}_0^2}$$

où $D_i$ est la densité de la série, $r_i^{max}$ est le plus grand rapport $r_k$ dans la série $H_i$, $card(H_i)$ est la cardinalité (taille) de la série $H_i$, $R_i$ est la richesse de la série, $N_i^{max}$ est la taille maximum de la série sur la base de la fréquence fondamentale $V_i$ de la série et de la fréquence maximum $V^{max}$ dans le spectre, $\lfloor x \rfloor$ est l'entier le plus grand qui n'est pas supérieur à x, $THD_i$ est le taux de distorsion dans la série $H_i$, sur la base des amplitudes $A_1$ à $A_N$ des composantes 1 à N dans la série.

Selon un autre aspect, on prévoit un support lisible par un ordinateur mémorisant un programme d'ordinateur qui, lorsqu'il est exécuté par un dispositif de traitement, amène la mise en oeuvre du procédé susmentionné.

Selon un autre aspect, on prévoit un dispositif de calcul pour détecter une anomalie dans un système mécanique ou électromécanique comprenant un dispositif de traitement agencé pour : identifier, à partir d'un ensemble de composantes spectrales généré sur la base d'un signal provenant d'au moins un capteur détectant des vibrations et/ou des fluctuations électriques dans le système, au moins des première et deuxième composantes spectrales, chaque composante représentant un harmonique ou une modulation associé à une composante candidate : en déterminant, sur la base d'une fréquence centrale et d'une marge d'erreur de la composante candidate, des limites de fréquence inférieure et supérieure d'une première fenêtre de recherche pour identifier la première composante ; en identifiant la première composante sur la base de la première fenêtre de recherche ; en modifiant la fréquence centrale et la marge d'erreur de la composante candidate sur la base d'une fréquence centrale et d'une marge d'erreur de la première composante ; et en déterminant, sur la base de la fréquence centrale modifiée et de la marge d'erreur modifiée de la composante candidate, des limites de fréquence inférieure et supérieure d'une deuxième fenêtre de recherche pour identifier la deuxième composante.

Selon encore un autre aspect, on prévoit un système comprenant : un système mécanique ou électromécanique ; au moins un capteur agencé pour détecter lesdites vibrations et/ou fluctuations électriques dans le système ; et le dispositif de calcul susmentionné agencé pour traiter un signal provenant dudit au moins un capteur.

Brève description des dessins

Les fonctionnalités et avantages susmentionnés, et d'autres, apparaîtront clairement avec la description détaillée suivante de modes de réalisation, faite à titre d'illustration et non de limitation, en référence aux dessins joints dans lesquels :

la figure 1 illustre un système mécanique ou électromécanique muni d'une détection d'anomalies selon un exemple de réalisation ;

la figure 2 illustre un exemple de spectre de fréquence d'un signal capturé par un capteur de la figure 1 selon un exemple de réalisation ;

la figure 3 est un diagramme spectral représentant des paramètres dans un procédé de détection d'anomalie selon un exemple de réalisation ;

la figure 4 est un organigramme illustrant des étapes dans un procédé de détection d'une anomalie dans un système mécanique ou électromécanique selon un exemple de réalisation de la présente description ; et

la figure 5 illustre un dispositif pour mettre en oeuvre un procédé de détection d'anomalie selon un exemple de réalisation de la présente description.

Description détaillée

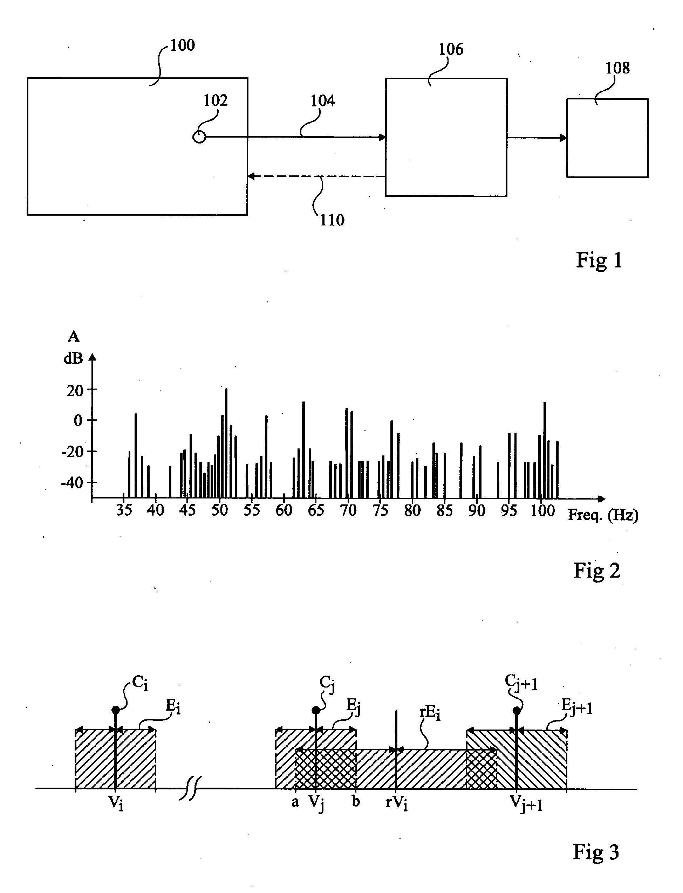

La figure 1 illustre un système 100 à surveiller. Ce système est par exemple un système mécanique ou électromécanique, comme une éolienne ou une hydrolienne, un moteur à combustion ou à réaction, un moteur électrique, une machinerie industrielle, ou d'autres types de systèmes comprenant des parties mobiles dans lesquelles on veut surveiller des anomalies.

L'anomalie à détecter est par exemple l'usure graduelle ou la défaillance d'une ou plusieurs parties du système. L'anomalie pourrait également être une opération non optimale de la totalité ou d'une partie du système.

On utilise un capteur 102 pour détecter des vibrations et/ou des fluctuations électriques en un point du système 100. Par exemple, le capteur 102 est un capteur de vibrations, comme un capteur MEMS (capteur micro-électromécanique), un accéléromètre ou similaire. Dans un tel cas, le capteur 102 est par exemple en contact physique avec la partie du système à surveiller, ou en contact physique avec un élément du système qui est mécaniquement relié à une ou plusieurs parties du système à surveiller. A titre de variante, le capteur pourrait être adapté à détecter des fluctuations électriques dans le câblage électrique du système, comme sur une borne d'entrée ou de sortie d'une partie à surveiller, par exemple un moteur électrique ou similaire. Un tel capteur est par exemple un détecteur de courant ou de tension, soit câblé électriquement soit couplé de façon électromécanique à des chemins conducteurs dans le système. Ici encore, le capteur peut être positionné de façon à pouvoir détecter des fluctuations provenant de plusieurs parties du système à surveiller.

Bien qu'un seul capteur 102 soit illustré en figure 1, dans des variantes de réalisation, il peut y avoir plusieurs capteurs pour surveiller divers points dans le système 100. La sortie de chaque capteur est par exemple traitée séparément de la même manière que celle qui va être décrite plus en détail ci-après.

Le capteur 102, et tous les autres capteurs présents dans le système, fournissent un signal de sortie sur une ligne 104 à un dispositif de calcul 106. Le dispositif de calcul 106 réalise une analyse de signal sur le signal de sortie. En particulier, le dispositif de calcul 106 convertit le signal de sortie variable dans le temps en un spectre de fréquence, par exemple en appliquant une transformation de Fourier discrète (DFT). Le dispositif de calcul 106 détecte ensuite des pics dans le spectre de fréquence pour fournir une liste de composantes spectrales. Le dispositif de calcul 106 analyse ensuite ces composantes spectrales pour identifier des séries de composantes, chaque série comprenant une composante de fréquence fondamentale, un ou plusieurs harmoniques de la fréquence fondamentale, et/ou une ou plusieurs composantes formant des bandes latérales de modulation des composantes fondamentales ou harmoniques. Le dispositif de calcul 106 détecte par exemple la présence d'une anomalie sur la base de l'une quelconque de telles composantes spectrales identifiées.

Dans certains modes de réalisation, le dispositif de calcul 106 fournit une indication de série identifiée de composantes spectrales, et/ou des détails d'une anomalie détectée, à un module de sortie 108, qui est par exemple un afficheur, une interface avec un site web, ou un autre type de moyen de sortie informant ou alertant un expert en maintenance du système des résultats de l'analyse.

Dans certains modes de réalisation, le dispositif de calcul 106 fournit en plus ou à la place un signal de sortie 110 renvoyé vers le système 100, qui par exemple altère le fonctionnement du système sur la base de l'anomalie détectée. Par exemple, le signal de sortie 110 peut être agencé pour immobiliser la totalité ou une partie du système dans le cas où une anomalie sérieuse est détectée, comme une pièce qui est sur le point de présenter une défaillance. En variante, le signal 110 peut être utilisé pour altérer le fonctionnement d'une ou plusieurs parties du système, comme réduire la vitesse de fonctionnement, jusqu'à ce qu'une réparation ou un remplacement de la pièce défectueuse puisse être réalisé.

La figure 2 est un graphique illustrant un exemple de composantes spectrales générées par le dispositif de calcul 106 de la figure 1 sur la base du signal de sortie du capteur 102. Chacun des pics représentés en figure 2, qui dans cet exemple sont dans une plage allant d'une fréquence d'environ 35 Hz à une fréquence d'environ 105 Hz, correspond à une composantes spectrale. Bien sûr, les composantes de fréquence peuvent aussi être présentes à des fréquences plus basses ou plus élevées non représentées en figure 2. Chaque composante spectrale correspond à un pic dans le spectre de fréquence du signal de sortie du capteur 102, et est par exemple associée à une fréquence centrale correspondant à la fréquence au centre du pic, et à une marge d'erreur indiquant la précision de la valeur de la fréquence centrale.

Par exemple, les composantes spectrales sont calculées sur la base du procédé décrit dans la publication intitulée "Vers une carte d'identité spectrale", Nadine Martin et al., GRETSI 2005, et/ou dans la demande PCT WO2006/051242, et dont le contenu fait partie de la présente description dans les limites où cela est autorisé par la loi. En effet, cette demande de brevet, qui a des inventeurs en commun avec la présente demande, concerne un procédé pour l'identification automatique de composantes spectrales d'un signal, et fournit, pour chaque pic d'un spectre de fréquence, une forme de carte d'identité indiquant des attributs de la composante spectrale correspondante, comme la fréquence centrale et l'erreur.

Des techniques permettant de convertir le signal de sortie d'un capteur en un spectre de fréquence sur la base d'une transformation de Fourier discrète, et de détecter dans le spectre de fréquence les composantes spectrales associées à une fréquence centrale et une marge d'erreur, sont dans les capacités de l'homme de l'art, au moins sur la base des publications mentionnées ci-avant, et ne seront pas décrites en détail ici. Par exemple, il sera clair pour l'homme de l'art que la marge d'erreur pour une composante de fréquence donnée peut être déterminée en fonction de la fréquence de cette composante, et en fonction du nombre de coefficients utilisés lors de l'application de la transformation de Fourier discrète pour générer le spectre de fréquence.

Est considéré comme une composante spectrale un pic correspondant dans le spectre de fréquence qui dépasse par exemple un niveau de seuil minimum. La génération de nouveaux ensembles de composantes de fréquences est par exemple réalisée périodiquement, par exemple avec une périodicité de quelques minutes ou de quelques heures. De cette façon, dès qu'un pic dans le spectre de fréquence dépasse le niveau de seuil minimum, une composante spectrale correspondante va être générée, celle-ci pouvant indiquer la présence d'une nouvelle anomalie dans le système.

Parmi les composantes spectrales illustrées en figure 2, certaines de ces composantes peuvent correspondre à des fréquences fondamentales présentes dans le système, alors que d'autres peuvent correspondre à des premiers, deuxièmes, troisièmes harmoniques ou des harmoniques supérieurs de ces fréquences fondamentales. En outre, autour de toute fréquence fondamentale ou harmonique, des bandes latérales de modulation peuvent être présentes, aussi représentées par des composantes spectrales correspondantes. Par exemple, la composante située autour de 50 Hz en figure 2 peut correspondre à une fréquence fondamentale, et une composante située juste au-dessus de 100 Hz peut correspondre à une première harmonique de la composante à 50 Hz. Une ou plusieurs des composantes de chaque côté des composantes à 50 et 100 Hz peuvent correspondre à des bandes latérales de modulation.

Une série de composantes spectrales, et en particulier la fréquence et l'amplitude d'une composante fondamentale et la présence et l'amplitude d'harmoniques et/ou de bandes de modulation associés, sont des indicateurs clés de la présence de certaines anomalies au niveau de certaines parties du système mécanique ou électromécanique, et peuvent être analysés pour déterminer non seulement le type et l'étendue d'une anomalie, mais aussi la partie ou la pièce du système au niveau de laquelle l'anomalie prend sa source. Il y a une difficulté technique pour identifier des séries de composantes spectrales. En effet, dans la sortie du capteur d'un système électromécanique typique, il peut y avoir des centaines ou des milliers de composantes spectrales identifiées, dont au moins certaines peuvent être relativement proches les unes des autres. Une erreur dans la sélection d'une telle composante spectrale peut conduire au fait qu'une anomalie soit manquée ou mal interprétée.

La figure 3 est un schéma représentant une série de composantes spectrales identifiés par un procédé selon un exemple de réalisation. Comme cela est illustré, une composante spectrale Ci est sélectionnée parmi l'ensemble de composantes spectrales en tant que fréquence fondamentale candidate. La composante Ci est associée à une fréquence centrale $V_i$ et à une marge d'erreur $E_i$. La marge d'erreur $E_i$ correspond à la distance positive ou négative par rapport à la valeur $V_i$ à laquelle la fréquence centrale $V_i$ peut en réalité être située.

L'existence d'une ou plusieurs composantes harmoniques associées à la composante Ci, et/ou d'une ou plusieurs composantes de bande de modulation associées à la composante Ci selon un rapport r est déterminée de la façon suivante. Le rapport r va dépendre de la composante harmonique ou de modulation à identifier. Par exemple, en supposant que le premier harmonique est à identifier, r est égal à 2.

Une fenêtre de recherche est définie pour servir à la localisation d'une composante harmonique ou de modulation potentielle, ayant une limite inférieure égale à $r(V_i-E_i)$ et une limite de fréquence supérieure égale à $r(V_i+E_i)$.

Ensuite, toute composante spectrale qui a une fréquence centrale tombant dans la fenêtre de recherche après avoir pris en compte sa marge d'erreur est considérée comme étant une composante potentiellement associée. Par exemple, en figure 3, une composante de fréquence $C_j$ a une fréquence centrale $V_j$ tombant dans la plage de fréquence $[r(V_i-E_i), rV_i]$ et une composante de fréquence $C_{j+1}$ a une fréquence centrale $V_{j+1}$, qui, lorsqu'elle est diminuée de la marge d'erreur $E_{j+1}$ de la composante $C_{j+1}$, tombe dans la plage de fréquence $[rV_i, r(V_i+E_i)]$. La condition peut être formalisée de la façon suivante pour la composante $C_j$, qui a une marge d'erreur $E_j$, où [a, b] est la plage de fréquence de chevauchement :

$$[a; b] = \left[V_j - E_j; V_j + E_j\right] \cap \left[r(V_i - E_i); r(V_i + E_i)\right] \neq 0 \quad \sim 1$$

Ensuite, l'une des composantes potentiellement associée est sélectionnée comme étant la composante la plus vraisemblablement associée à la composante candidate Ci. Par exemple, la composante la plus proche du centre de la fenêtre de recherche, en d'autres termes la plus proche de $rV_i$, est sélectionnée. Dans l'exemple de la figure 3, cela correspond à la composante $C_j$.

Avant de répéter l'opération décrite précédemment pour une nouvelle valeur de r afin d'identifier un autre élément de la série comprenant la composante candidate Ci, la fréquence centrale $V_i$ et la marge d'erreur $E_i$ de la composante Ci sont mises à jour sur la base des paramètres de la dernière composante identifiée, en d'autres termes la composante $C_j$ dans l'exemple de la figure 3. En particulier, la composante $C_j$ est supposée tomber dans la plage de fréquences de chevauchement [a, b] de la fenêtre de recherche avec la fréquence centrale $V_j$ de la composante Cj plus et moins la marge d'erreur $E_j$. Ainsi, la limite inférieure "a" de cette plage est la fréquence $r(V_i-E_i)$, et la limite supérieure "b" de cette plage en figure 3 est la fréquence Vj+Ej. La nouvelle fréquence centrale et la nouvelle marge d'erreur de la composante Ci deviennent par conséquent :

$$V_i = \frac{(a + b)}{2 \times r} ; E_i = \frac{(b - a)}{2 \times r} \quad\quad\quad \sim 2$$

Ainsi la nouvelle fréquence centrale $V_i$ est basée sur la composante $C_j$ se trouvant à mi-chemin entre a et b, et la nouvelle marge d'erreur est basée sur la moitié de l'intervalle de fréquence entre a et b.

Le rapport r d'une composante harmonique ou de modulation suivante à identifier est par exemple une valeur supérieure, par exemple égale à 3 dans le cas où la deuxième harmonique doit être identifiée. Par conséquent, plutôt qu'une nouvelle fenêtre de recherche soit 2r fois plus grande que la marge d'erreur initiale $E_i$ de la composante $C_i$, la nouvelle fenêtre va avoir de 2r fois la taille de la valeur modifiée de la marge d'erreur, ce qui est notablement plus petit.

Une deuxième composante dans la nouvelle fenêtre de recherche peut être identifiée de la même façon que cela a été décrit précédemment, avant que le processus soit répété pour l'identification d'autant de composantes associées additionnelles qu'on le souhaite.

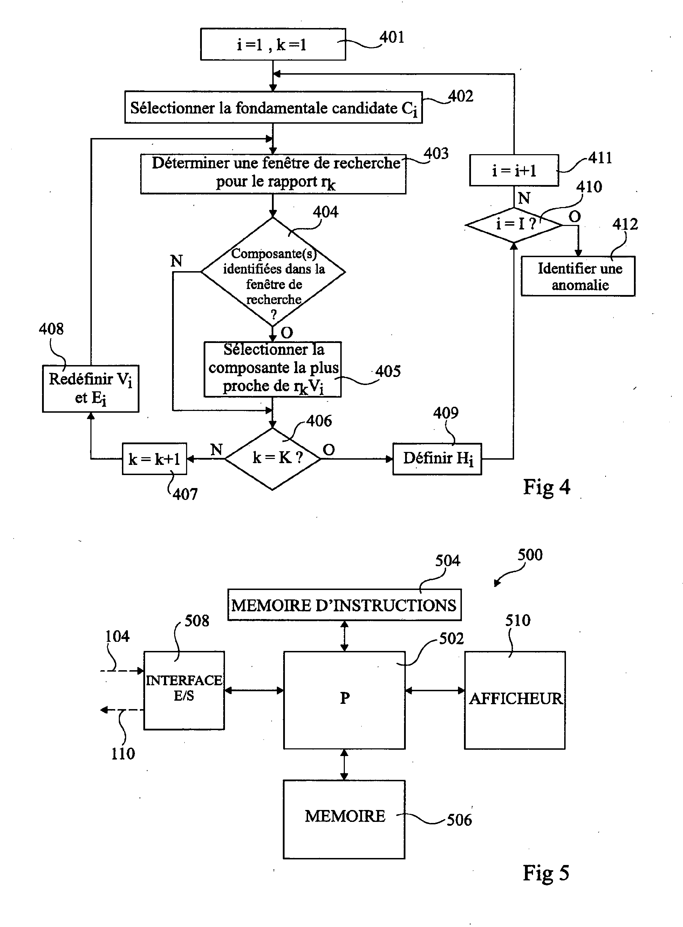

La figure 4 est un organigramme illustrant un exemple de procédé pour détecter une anomalie dans un système mécanique ou électromécanique selon un exemple de réalisation.

On suppose en figure 4 qu'un ensemble de I composantes spectrales basé sur un signal détecté par un capteur a déjà été généré, et que chacune des composantes spectrales Ci est associée à une fréquence centrale $V_i$ et à une marge d'erreur $E_i$, pour i compris entre 1 et I.

Dans une opération 401, des paramètres i et k sont initialisés, par exemple à la valeur 1. Comme cela a été indiqué précédemment, le paramètre i désigne l'une des composantes Ci qui est appelée ici composante candidate. Le paramètre k désigne un rapport $r_k$ correspondant à une composante harmonique ou de bande de modulation courante à identifier, pour k égal à 1 à K. Le nombre total K de rapports va dépendre du nombre de composantes harmoniques/de modulation à identifier, et pourrait par exemple être un nombre quelconque entre 2 et 50. Il sera clair pour l'homme de l'art que ce nombre va dépendre de la taille du spectre, et de la fréquence fondamentale. Par exemple, les valeurs $r_1$ à $r_k$ sont respectivement égales à 2, 3, 4, ... K+1.

Dans une opération suivante 402, la fondamentale candidate Ci est sélectionnée, correspondant initialement à la composante $C_1$.

Dans une opération suivante 403, une fenêtre de recherche est déterminée pour la composante associée au rapport $r_k$. Initialement, le rapport est $r_1$, qui correspond par exemple à un rapport égal à 2. La fenêtre de recherche est égale à $[r_k(V_i-E_i), r_k(V_i+E_i)]$.

Dans le cas d'une recherche de composantes spectrales de bande de modulation, on peut utiliser les mêmes valeurs de r que celles utilisées pour les composantes harmoniques. Toutefois, en supposant que des bandes de modulation situées à droite, c'est-à-dire ayant une fréquence supérieure, d'une composante $C_m$ ayant une fréquence centrale $V_m$ doivent être identifiées, la valeur $V_m$ est par exemple soustraite de la fréquence centrale $V_i$ de la composante

candidate Ci avant de déterminer la fenêtre de recherche, et les limites inférieure et supérieure de la fenêtre de recherche vont être égales à $[V_m+r_k(V_i-E_i), V_m+r_k(V_i+E_i)]$. Si les bandes de modulation situées à gauche, c'est-à-dire de fréquence inférieure, de la composante $C_m$ doivent être identifiées, la fréquence centrale $V_i$ de la composante candidate est par exemple soustraite de la valeur $V_m$ avant de déterminer la fenêtre de recherche, et les limites inférieure et supérieure de la fenêtre de recherche vont être égales à $[V_m-r_k(V_i+E_i), V_m-r_k(V_i-E_i)]$.

Dans une opération suivante 404, on détermine si une ou plusieurs composantes ont été identifiées dans la fenêtre de recherche, en prenant en compte la marge d'erreur $E_j$ de chaque composante $C_j$. En particulier, la condition de la formule 1 précédente est appliquée pour les composantes $C_j$. Si au moins une composante est trouvée dans la fenêtre de recherche, l'opération suivante est l'opération 405, dans laquelle une composante est sélectionnée parmi les composantes trouvées. Comme cela a été mentionné précédemment, la composante la plus proche du niveau de fréquence $r_kV_i$ est par exemple sélectionnée.

L'opération après l'opération 405, ou après l'opération 404 si aucune composante n'est trouvée dans la fenêtre de recherche, est l'opération 406, dans laquelle on vérifie si k est égal à K. Dans la négative, l'opération suivante est l'opération 407, dans laquelle k est incrémenté, puis dans une opération suivante 408, la valeur $V_i$ de la fréquence centrale et l'erreur $E_i$ de la composante Ci sont redéfinies sur la base de la composante identifiée dans l'opération 404. En particulier, les formules 2 décrites précédemment sont par exemple appliquées. Le procédé revient ensuite à l'opération 403 pour déterminer une nouvelle fenêtre de recherche sur la base de la nouvelle valeur de $r_k$ et des valeurs modifiées de $V_i$ et $E_i$.

Si dans l'opération 407, on a trouvé que k est égal à K, l'opération suivante est l'opération 409, dans laquelle la série $H_i$ des composantes harmoniques et/ou de modulation associées à la composante Ci est définie. Une telle famille $H_i$ est par exemple définie seulement si au moins une composante harmonique ou de modulation associée à la composante Ci a été identifiée.

Après l'opération 409, l'opération suivante est l'opération 410, dans laquelle on vérifie si i est égal à I. Dans la négative, i est incrémenté dans une opération 411, et le procédé revient à l'opération 402, où une nouvelle composante candidate est sélectionnée sur la base de la nouvelle valeur de i. Dans l'autre cas, si dans l'opération 410 on a trouvé que i est égal à I, le processus par exemple se termine au niveau d'une opération 412, dans laquelle une anomalie est identifiée sur la base de la série $H_i$ de composantes qui ont été identifiées.

Ainsi le procédé continue jusqu'à ce que toutes les composantes Ci à $C_I$ aient été évaluées, pour tous les rapports $r_1$ à $r_K$ ou jusqu'à ce qu'aucune composante ne puisse être identifiée dans la fenêtre de recherche. On notera que certains éléments de la série $H_i$ peuvent comprendre la même composante, si par exemple une telle composante résulte de la somme d'harmoniques de fréquences fondamentales différentes.

L'identification d'une anomalie réalisée dans l'opération 412 est par exemple obtenue en déterminant au moins l'une des caractérisations suivantes d'une série identifiée.

$$D_i \ = \ \frac{card(H_i)}{r_i^{max}} \qquad\qquad \sim 3$$

$$R_i \ = \ \frac{r_i^{max}}{N_i^{max}} \ \ avec \ \ N_i^{max} \ = \ \left\lfloor \frac{V^{max}}{V_i} \right\rfloor \qquad\qquad \sim 4$$

$$THD_i \ = \ \frac{\sqrt{\tilde{A}_1^2 \ + \ \tilde{A}_2^2 \ + \ ... \ + \ \tilde{A}_{N_{i-1}}^2}}{\tilde{A}_0^2} \qquad\qquad \sim 5$$

où $D_i$ est la densité de la série, $r_i^{max}$ est le rapport $r_k$ le plus grand dans la série $H_i$, $card(H_i)$ est la cardinalité (taille) de la série $H_i$, $R_i$ est la richesse de la série, $N_i^{max}$ est la taille maximum de la série sur la base de la fréquence fondamentale $V_i$ de la série et de la fréquence maximum $V^{max}$ dans le spectre, $\lfloor x \rfloor$ est l'entier le plus grand qui n'est pas supérieur à x, $THD_i$ est le taux de distorsion dans la série $H_i$, sur la base des amplitudes $A_1$ à $A_N$ des composantes 1 à N dans la série.

La figure 5 illustre un exemple d'un dispositif de traitement 500 du dispositif de calcul 106 de la figure 1. Le dispositif de traitement 500 est agencé pour mettre en oeuvre le procédé de détection d'anomalie décrit ici. Le dispositif 500 comprend par exemple un ou plusieurs processeurs 502 (P) sous le contrôle d'instructions mémorisées dans une mémoire d'instructions 504. En outre, le dispositif 500 comprend par exemple une mémoire 506 par exemple configurée pour mémoriser la liste de composantes spectrales Ci à $C_I$, accompagnée d'au moins les fréquences centrales $V_i$

correspondantes et de la marge d'erreur $E_i$ pour chaque composante, comme cela a été décrit précédemment, et de toutes les séries $H_i$ identifiées. En outre, la mémoire 506, peut mémoriser le signal variable dans le temps provenant du capteur 102, qui est par exemple reçu par le dispositif de traitement 502 par l'intermédiaire d'une interface d'entrée/sortie 508 couplée à la ligne d'entrée 104. L'interface d'entrée/sortie 508 peut comprendre un convertisseur analogique-numérique pour échantillonner le signal d'entrée et le numériser. L'interface d'entrée/sortie 508 peut aussi être couplée à la ligne de sortie 110 pour contrôler le fonctionnement du système mécanique ou électromécanique dans le cas où une anomalie est détectée.

Le dispositif 500 comprend par exemple en plus un afficheur 510, qui par exemple fournit une interface d'utilisateur, ainsi que des moyens pour alerter un utilisateur en indiquant si et quand une anomalie a été détectée.

Un avantage des modes de réalisation décrits ici est qu'une anomalie dans un système peut être détectée avec précision même dans des systèmes relativement complexes dans lesquels le spectre de fréquence calculé par un capteur comprend de nombreuses composantes spectrales.

Avec la description ainsi faite d'au moins un mode de réalisation illustratif, diverses altérations, modifications et améliorations apparaîtront facilement à l'homme de l'art.

Par exemple, il sera clair pour l'homme de l'art que, bien qu'on ait décrit un procédé utilisant des formules spécifiques, il s'agit simplement d'exemples d'une façon de mettre en oeuvre le procédé, et que diverses modifications pourraient être appliquées à ces formules.

## Revendications

1. Procédé pour détecter une anomalie dans un système mécanique ou électromécanique, comprenant les étapes suivantes :

  identifier par un dispositif de traitement, à partir d'un ensemble de composantes spectrales généré sur la base d'un signal provenant d'au moins un capteur détectant des vibrations et/ou des fluctuations électriques dans le système, au moins des première et deuxième composantes spectrales, chaque composante représentant un harmonique ou une modulation associé à une composante candidate ($C_i$) :

   en déterminant, sur la base d'une fréquence centrale ($V_i$) et d'une marge d'erreur ($E_i$) de la composante candidate, des limites de fréquence inférieure et supérieure ($r_1(V_i \pm E_i)$) d'une première fenêtre de recherche pour identifier la première composante ;
   en identifiant la première composante sur la base de la première fenêtre de recherche ;
   en modifiant la fréquence centrale et la marge d'erreur de la composante candidate sur la base d'une fréquence centrale et d'une marge d'erreur de la première composante ; et
   en déterminant, sur la base de la fréquence centrale modifiée ($V_i$) et de la marge d'erreur modifiée ($E_i$) de la composante candidate, des limites de fréquence inférieure et supérieure ($r_2(V_i \pm E_i)$) d'une deuxième fenêtre de recherche pour identifier la deuxième composante.

2. Procédé selon la revendication 1, comprenant en outre l'identification de la deuxième composante dans la deuxième fenêtre de recherche.

3. Procédé selon la revendication 1 ou 2, comprenant en outre la définition d'une série de composantes spectrales ($H_i$) comprenant au moins la composante candidate et les première et deuxième composantes, et la détection de l'anomalie au moins partiellement sur la base de ladite série.

4. Procédé selon l'une quelconque des revendications 1 à 3, comprenant en outre la génération d'un signal de sortie pour contrôler une partie du système mécanique ou électromécanique sur la base de l'anomalie détectée.

5. Procédé selon l'une quelconque des revendications 1 à 4, dans lequel les première et deuxième composantes sont des harmoniques de la composante candidate, et dans lequel l'anomalie est détectée sur la base de paramètres d'une ou plusieurs composantes de modulation associées à la composante candidate ou à la première ou la deuxième composante.

6. Procédé selon l'une quelconque des revendications 1 à 5, dans lequel chacune des limites inférieure et supérieure des première et deuxième fenêtres de recherche est déterminée sur la base des équations $r_k(V_i-E_i)$ et $r_k(V_i+E_i)$, où $r_k$ est l'ordre harmonique des première et deuxième composantes respectivement, $V_i$ est la fréquence centrale associée à la composante candidate, et $E_i$ est la marge d'erreur associée à la composante candidate.

**7.** Procédé selon l'une quelconque des revendications 1 à 6, dans lequel la première composante est considérée comme tombant dans la première fenêtre de recherche si la condition suivante est vérifiée :

$$[a; b] = [V_j - E_j; V_j + E_j] \cap [r_k(V_i - E_i); r_k(V_i + E_i)] \neq 0$$

où [a ; b] est une plage de fréquence de chevauchement, $V_j$ est la fréquence centrale de la première composante, $E_j$ est la marge d'erreur de la première composante, $V_i$ est la fréquence centrale de la composante candidate, $E_i$ est la marge d'erreur de la composante candidate et $r_k$ est l'ordre de l'harmonique.

**8.** Procédé selon la revendication 7, dans lequel à la suite de l'identification de la première composante, la fréquence centrale $V_i$ et la marge d'erreur $E_i$ sont mises à jour de la façon suivante :

$$V_i = \frac{(a + b)}{2 \times r} ; E_i = \frac{(b - a)}{2 \times r}$$

où a est la limite inférieure de la plage de fréquence de chevauchement et b est la limite supérieure de la plage de fréquence de chevauchement.

**9.** Procédé selon l'une quelconque des revendications 1 à 8, comprenant en outre la détermination d'au moins un élément parmi une valeur de densité $D_i$ de la série, une richesse $R_i$ de la série et un taux de distorsion $THD_i$ de la série sur la base des équations suivantes :

$$D_i = \frac{card(H_i)}{r_i^{max}}$$

$$R_i = \frac{r_i^{max}}{N_i^{max}} \quad avec \quad N_i^{max} = \left\lfloor \frac{V^{max}}{V_i} \right\rfloor$$

$$THD_i = \frac{\sqrt{\tilde{A}_1^2 + \tilde{A}_2^2 + \ldots + \tilde{A}_{N_{i-1}}^2}}{\tilde{A}_0^2}$$

où $D_i$ est la densité de la série, $r_i^{max}$ est le plus grand rapport $r_k$ dans la série $H_i$, card($H_i$) est la cardinalité (taille) de la série $H_i$, $R_i$ est la richesse de la série, $N_i^{max}$ est la taille maximum de la série sur la base de la fréquence fondamentale $V_i$ de la série et de la fréquence maximum $V^{max}$ dans le spectre, $\lfloor x \rfloor$ est l'entier le plus grand qui n'est pas supérieur à x, $THD_i$ est le taux de distorsion dans la série $H_i$, sur la base des amplitudes $A_1$ à $A_N$ des composantes 1 à N dans la série.

**10.** Support lisible par un ordinateur mémorisant un programme d'ordinateur qui, lorsqu'il est exécuté par un dispositif de traitement, amène la mise en oeuvre du procédé de l'une quelconque des revendications 1 à 9.

**11.** Dispositif de calcul pour détecter une anomalie dans un système mécanique ou électromécanique comprenant un dispositif de traitement agencé pour :

identifier, à partir d'un ensemble de composantes spectrales généré sur la base d'un signal provenant d'au moins un capteur détectant des vibrations et/ou des fluctuations électriques dans le système, au moins des première et deuxième composantes spectrales, chaque composante représentant un harmonique ou une modulation associé à une composante candidate ($E_i$) :

en déterminant, sur la base d'une fréquence centrale ($V_i$) et d'une marge d'erreur ($E_i$) de la composante candidate, des limites de fréquence inférieure et supérieure ($r_1(V_i \pm E_i)$) d'une première fenêtre de recherche pour identifier la première composante ;
en identifiant la première composante sur la base de la première fenêtre de recherche ;
en modifiant la fréquence centrale et la marge d'erreur de la composante candidate sur la base d'une fréquence centrale et d'une marge d'erreur de la première composante ; et
en déterminant, sur là base de la fréquence centrale modifiée ($V_i$) et de la marge d'erreur modifiée ($E_i$) de la composante candidate, des limites de fréquence inférieure et supérieure ($r_2(V_i \pm E_i)$) d'une deuxième fenêtre de recherche pour identifier la deuxième composante.

**12.** Système comprenant :

un système mécanique ou électromécanique ;
au moins un capteur agencé pour détecter lesdites vibrations et/ou fluctuations électriques dans le système ; et
le dispositif de calcul de la revendication 11 agencé pour traiter un signal provenant dudit au moins un capteur.

## Patentansprüche

**1.** Ein Verfahren zum Detektieren einer Anomalie in einem mechanischen oder elektro-mechanischen System, wobei Folgendes vorgesehen ist:

Identifizieren durch eine Verarbeitungsvorrichtung aus einem Satz von Spektralkomponenten, erzeugt basierend auf einem Signal von mindestens einem Sensor, der Vibrationen und/oder elektrische Fluktuationen in dem System detektiert, mindestens erste und zweite Spektralkomponenten, wobei jede Komponente eine Harmonische oder Modulation, assoziiert mit einer Kandidatenkomponente ($C_i$) repräsentiert, und zwar durch:

Bestimmen, basierend auf einer Zentral- bzw. Mittenfrequenz ($V_i$) und einem Fehlerbereich ($E_i$) der Kandidatenkomponente untere und obere Frequenzgrenzen ($r_1(V_i \pm E_i)$) eines ersten Suchfensters zur Identifizierung der erwähnten ersten Komponente;
Identifizieren der ersten Komponente, basierend auf dem erwähnten ersten Suchfenster;
Modifizieren der erwähnten Zentralfrequenz und des Fehlerbereichs der erwähnten Kandidatenkomponente, basierend auf einer Zentralfrequenz und dem Fehlerbereich der ersten Komponente; und
Bestimmen, basierend auf der modifizierten Zentralfrequenz ($V_i$) und dem modifizierten Fehlerbereich ($E_i$) der Kandidatenkomponente untere und obere Frequenzgrenzen ($r_2(V_i \pm E_i)$) eines zweiten Suchfensters zur Identifizierung der erwähnten zweiten Komponente.

**2.** Das Verfahren nach Anspruch 1, wobei ferner das Identifizieren der zweiten Komponente innerhalb des zweiten Suchfensters vorgesehen ist.

**3.** Das Verfahren nach Anspruch 1 oder 2, wobei ferner Folgendes vorgesehen ist:

Definieren einer Serie bzw. Reihe von Spektralkomponenten ($H_i$) einschließlich mindestens der erwähnten Kandidatenkomponente und der erwähnten ersten und zweiten Komponenten, und Detektieren der Anomalie mindestens teilweise basierend auf der erwähnten Serie.

**4.** Das Verfahren nach einem der Ansprüche 1 bis 3, wobei ferner Folgendes vorgesehen ist:

Erzeugen eines Ausgangssignals zur Steuerung eines Teils des mechanischen oder elektro-mechanischen Systems, basierend auf der detektierten Anomalie.

**5.** Das Verfahren nach einem der Ansprüche 1 bis 4, wobei die ersten und zweiten Komponenten Harmonische der Kandidatenkomponente sind, und wobei die erwähnte Anomalie detektiert wird, basierend auf Parametern von einer oder mehreren Modulationskomponenten, assoziiert mit der erwähnten Kandidatenkomponente oder mit den erwähnten ersten oder zweiten Komponenten.

**6.** Das Verfahren nach einem der Ansprüche 1 bis 5, wobei die erwähnten unteren und oberen Grenzen der ersten und zweiten Suchfenster jeweils bestimmt sind, basierend auf den Gleichungen $r_k(V_i-E_i)$ und $r_k(V_i+E_i)$, wobei $r_k$ die harmonische Ordnung der ersten bzw. zweiten Komponenten ist, $V_i$ die Zentralfrequenz, assoziiert mit der Kandidatenkomponente ist, und $E_i$ der Fehlerbereich, assoziiert mit der erwähnten Kandidatenkomponente ist.

**7.** Das Verfahren nach einem der Ansprüche 1 bis 6, wobei die erste Komponente als innerhalb des ersten Suchfensters fallend angesehen wird, wenn die folgende Bedingung gültig ist:

$$[a;\ b] = \left[V_j - E_j;\ V_j + E_j\right] \cap \left[r_k\!\left(V_i - E_i\right);\ r_k\!\left(V_i + E_i\right)\right] \neq 0$$

wobei [a; b] ein überlappender Frequenzbereich ist, $V_j$ die Zentralfrequenz der ersten Komponente ist, $E_j$ der Fehlerbereich der ersten Komponente ist, $V_i$ die Mittelfrequenz der Kandidatenkomponente ist, $E_i$ der Fehlerbereich der Kandidatenkomponente ist und $r_k$ die Ordnung der Harmonischen ist.

**8.** Das Verfahren nach Anspruch 7, wobei darauffolgend auf die Identifikation der ersten Komponente die Zentralfrequenz $V_i$ und der Fehlerbereich $E_i$ wie folgt auf den neuesten Stand gebracht werden:

$$V_i = \frac{(a + b)}{2 \times r}\ ;\ E_i = \frac{(b - a)}{2 \times r}$$

wobei a die untere Grenze des überlappenden Frequenzbereichs ist und b die obere Grenze des überlappenden Frequenzbereichs ist.

**9.** Das Verfahren nach einem der Ansprüche 1 bis 8, wobei ferner die Bestimmung von mindestens einem von Folgendem vorgesehen ist, einem Dichtewert $D_i$ der Serie, eines Reichheitswerts $R_i$ der Serie, und eine Verformungsrate THD der Serie, basierend auf den folgenden Gleichungen:

$$D_i = \frac{card(H_i)}{r_i^{\max}}$$

$$R_i = \frac{r_i^{\max}}{N_i^{\max}} \ with\ N_i^{\max} = \left\lfloor \frac{V^{\max}}{V_i} \right\rfloor$$

$$THD_i = \frac{\sqrt{\tilde{A}_1^2 + \tilde{A}_2^2 + \ldots + \tilde{A}_{N_{i-1}}^2}}{\tilde{A}_0^2}$$

wobei $D_i$ die Dichte der Serie ist, $r_i^{\max}$ das größte Verhältnis $r_k$ in der Serie $H_i$ ist, Card ($H_i$) die Kardinalität bzw. Größe der Serie $H_i$ ist, $R_i$ der Reichheitswert der Serie ist, $N_i^{\max}$ die Maximalgröße der Serie ist, basierend auf der Grundfrequenz $V_i$ der Serie und der Maximalfrequenz $V^{\max}$ in dem Spektrum, [x] die größte ganze Zahl nicht größer als x ist, $THD_i$ die Verformungsrate in der Serie $H_i$ ist, basierend auf der Amplituden $A_1$ bis $A_N$ der Komponenten 1 bis N in der Serie.

**10.** Ein computerlesbares Medium, welches ein Computerprogramm speichert, das wenn es durch eine Verarbeitungsvorrichtung ausgeführt wird bewirkt, dass das Verfahren irgendeiner der Ansprüche 1 bis 9 implementiert wird.

**11.** Eine Computervorrichtung zum Detektieren einer Anomalie in einem mechanischen oder elektro-mechanischen System, welches eine Verarbeitungsvorrichtung aufweist, konfiguriert um

aus einem Satz von Spektralkomponenten, erzeugt basierend auf einem Signal von mindestens einem Sensor, der Vibrationen und/oder elektrische Fluktuationen im System detektiert, mindestens erste und zweite Spektralkomponenten zu identifizieren, wobei jede Komponente eine Harmonische oder Modulation, assoziiert mit einer Kandidatenkomponente ($E_i$) repräsentiert, und zwar durch:

Bestimmung, basierend auf einer Zentralfrequenz ($V_i$) und einem Fehlerbereich ($E_i$) der erwähnten Kandidatenkomponente untere und obere Frequenzgrenzen ($r_1(V_i \pm E_i)$) eines ersten Suchfensters zur Identifizierung der erwähnten ersten Komponente;

Identifizieren der erwähnten ersten Komponente, basierend auf dem erwähnten ersten Suchfenster;

Modifizieren der erwähnten Zentralfrequenz und des Fehlerbereichs der erwähnten Kandidatenkomponente, basierend auf einer Zentralfrequenz und einem Fehlerbereich der ersten Komponente; und

Bestimmen, basierend auf der erwähnten modifizierten Zentralfrequenz ($V_i$) und dem Fehlerbereich ($E_i$) der erwähnten Kandidatenkomponente untere und obere Frequenzgrenzen ($r_2(V_i \pm E_i)$) eines zweiten Suchfensters zur Identifizierung der erwähnten zweiten Komponente.

**12.** Ein System, das Folgendes aufweist:

ein mechanisches oder elektro-mechanisches System;

mindestens einen Sensor, konfiguriert zur Detektion der erwähnten Vibrationen und/oder elektrischen Fluktuationen in dem System; und

die Computervorrichtung gemäß Anspruch 11, konfiguriert zur Verarbeitung eines Signals von dem erwähnten mindestens einem Sensor.

**Claims**

**1.** A method of detecting an anomaly in a mechanical or electro-mechanical system comprising:

identifying by a processing device, from a set of spectral components generated based on a signal from at least one sensor detecting vibrations and/or electrical fluctuations in the system, at least first and second spectral components, each component representing a harmonic or modulation associated with a candidate component (Ci), by:

determining, based on a central frequency ($V_i$) and error margin ($E_i$) of said candidate component, lower and upper frequency limits ($r_1(V_i \pm E_i)$) of a first search window for identifying said first component;

identifying said first component based on said first search window;

modifying said central frequency and error margin of said candidate component based on a central frequency and error margin of said first component; and

determining, based on said modified central frequency ($V_i$) and modified error margin ($E_i$) of said candidate component, lower and upper frequency limits ($r_2(V_i \pm E_i)$) of a second search window for identifying said second component.

**2.** The method of claim 1, further comprising identifying said second component within said second search window.

**3.** The method of claim 1 or 2, further comprising defining a series of spectral components ($H_i$) including at least said candidate component and said first and second components, and detecting said anomaly at least partially based on said series.

**4.** The method of any of claims 1 to 3, further comprising generating an output signal for controlling a part of said mechanical or electro-mechanical system based on said detected anomaly.

**5.** The method of any of claims 1 to 4, wherein said first and second components are harmonics of said candidate component, and wherein said anomaly is detected based on parameters of one or more modulation components associated with said candidate component or with said first or second component.

**6.** The method of any of claims 1 to 5, wherein said lower and upper limits of said first and second search windows are each determined based on the equations $r_k(V_i-E_i)$ and $r_k(V_i+E_i)$, where $r_k$ is the harmonic order of the first and second components respectively, $V_i$ is the central frequency associated with said candidate component, and $E_i$ is the error margin associated with said candidate component.

7. The method of any of claims 1 to 6, wherein said first component is considered to fall within said first search window if the following condition holds true:

$$[a;\ b]\ =\ \left[V_j\ -\ E_j;\ V_j\ +\ E_j\right] \cap \left[r_k\left(V_i\ -\ E_i\right);\ r_k\left(V_i\ +\ E_i\right)\right]\ \neq\ 0$$

where [a; b] is an overlapping frequency range, $V_j$ is the central frequency of said first component, $E_j$ is the error margin of said first component, $V_i$ is the central frequency of the candidate component, $E_i$ is the error margin of the candidate component and $r_k$ is the order of the harmonic.

8. The method of claim 7, wherein following the identification of said first component, said central frequency $V_i$ and error margin $E_i$ are updated as follows:

$$V_i\ =\ \frac{(a\ +\ b)}{2\ \times\ r}\ ;\ E_i\ =\ \frac{(b\ -\ a)}{2\ \times\ r}$$

where a is the lower limit of the overlapping frequency range and b is the upper limit of the overlapping frequency range.

9. The method of any of claims 1 to 8, further comprising determining at least one of a density value $D_i$ of the series, a richness $R_i$ of the series and a distortion rate $THD_i$ of the series based on the following equations:

$$D_i\ =\ \frac{card\left(H_i\right)}{r_i^{max}}$$

$$R_i\ =\ \frac{r_i^{max}}{N_i^{max}}\ \text{with}\ N_i^{max}\ =\ \left\lfloor \frac{V^{max}}{V_i}\right\rfloor$$

$$THD_i\ =\ \frac{\sqrt{\tilde{A}_1^2\ +\ \tilde{A}_2^2\ +\ \ldots\ +\ \tilde{A}_{N_{i-1}}^2}}{\tilde{A}_0^2}$$

where $D_i$ is the density of the series, $r_i^{max}$ is the largest ratio $r_k$ in the series $H_i$, $card(H_i)$ is the cardinality (size) of the series $H_i$, $R_i$ is the richness of the series, $N_i^{max}$ is maximum size of the series based on the fundamental frequency $V_i$ of the series and the maximum frequency $V^{max}$ in the spectrum, $\lfloor x \rfloor$ is the largest integer not greater than x, $THD_i$ is the distortion rate in the series $H_i$, based on the amplitudes $A_1$ to $A_N$ of the components 1 to N in the series.

10. A computer readable medium storing a computer program that, when executed by a processing device, causes the method of any of claims 1 to 9 to be implemented.

11. A computing device for detecting an anomaly in a mechanical or electro-mechanical system comprising a processing device configured to:

identify, from a set of spectral components generated based on a signal from at least one sensor detecting vibrations and/or electrical fluctuations in the system, at least first and second spectral components, each component representing a harmonic or modulation associated with a candidate component ($E_i$), by:

determining, based on a central frequency ($V_i$) and error margin ($E_i$) of said candidate component, lower and upper frequency limits ($r_1(V_i \pm E_i)$) of a first search window for identifying said first component;

identifying said first component based on said first search window;

modifying said central frequency and error margin of said candidate component based on a central frequency and error margin of said first component; and

determining, based on said modified central frequency ($V_i$) and error margin ($E_i$) of said candidate component, lower and upper frequency limits ($r_2(V_i \pm E_i)$) of a second search window for identifying said second component.

12. A system comprising:

a mechanical or electro-mechanical system;

at least one sensor configured to detect said vibrations and/or electrical fluctuations in the system; and

the computing device of claim 11 configured to process a signal from said at least one sensor.

Fig 1

Fig 2

Fig 3

**Fig 4**

401 — $i = 1, k = 1$

402 — Sélectionner la fondamentale candidate $C_i$

403 — Déterminer une fenêtre de recherche pour le rapport $r_k$

404 — Composante(s) identifiées dans la fenêtre de recherche ?

405 — Sélectionner la composante la plus proche de $r_k V_i$

406 — $k = K$ ?

407 — $k = k+1$

408 — Redéfinir $V_i$ et $E_i$

409 — Définir $H_i$

410 — $i = I$ ?

411 — $i = i+1$

412 — Identifier une anomalie

**Fig 5**

504 — MEMOIRE D'INSTRUCTIONS

508 — INTERFACE E/S

502 — P

510 — AFFICHEUR

506 — MEMOIRE

500

104

110

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006051242 A

**Littérature non-brevet citée dans la description**

- **L.M. GELMAN et al.** Condition Monitoring Diagnosis Methods of Helicopter Units. *Mechanical Systems and Signal Processing,* Juillet 2000, vol. 14, 4
- **PEDRO FAUSTO GARCIA MARQUEZ et al.** Condition monitoring of wind turbines : Technique and methods. *Renewable Energy,* 2012, vol. 46, 169-178

- Teager energy operator for multi-modulation extraction and its application for gearbox fault detection. **SOLTANI BOZCHALOOI I et al.** SMART MATERIALS AND STRUCTURES. IOP PUBLISHING LTD, 01 Juin 2010, vol. 19, 75008